(19) Europäisches Patentamt
European Patent Office
Office européen des brevets

(11) **EP 1 369 985 B1**

(12) **EUROPÄISCHE PATENTSCHRIFT**

(45) Veröffentlichungstag und Bekanntmachung des Hinweises auf die Patenterteilung:
**13.05.2009 Patentblatt 2009/20**

(51) Int Cl.:
***H02M 7/53*** (2006.01)

(21) Anmeldenummer: **03009882.6**

(22) Anmeldetag: **15.05.2003**

(54) **Wechselrichter zum Umwandeln einer elektrischen Gleichspannung in einen Wechselstrom oder eine Wechselspannung**

Inverter for transforming a DC voltage into an AC current or an AC voltage

Onduleur pour transformer une tension continue en courant alternatif ou en tension alternative

(84) Benannte Vertragsstaaten:
**AT BE BG CH CY CZ DE DK EE ES FI FR GB GR HU IE IT LI LU MC NL PT RO SE SI SK TR**

(30) Priorität: **15.05.2002 DE 10221592**

(43) Veröffentlichungstag der Anmeldung:
**10.12.2003 Patentblatt 2003/50**

(73) Patentinhaber: **Fraunhofer-Gesellschaft zur Förderung der angewandten Forschung e.V. 80686 München (DE)**

(72) Erfinder:
• **Schmidt, Heribert, Dr. Ing. 79312 Emmendingen (DE)**
• **Siedle, Christoph, Dr. 79108 Freiburg (DE)**
• **Ketterer, Jürgen 79256 Buchenbach (DE)**

(74) Vertreter: **Rösler, Uwe Rösler Patentanwaltskanzlei, Landsberger Strasse 480a 81241 München (DE)**

(56) Entgegenhaltungen:
EP-A- 1 026 816          DE-A1- 19 937 410
DE-C1- 19 732 218        US-A- 5 710 698
US-A- 5 852 558          US-B1- 6 330 170

• RAO A; LIPO T A; JULIAN A L: "A modified single phase inverter topology with active common mode voltage cancellation" 27. Juni 1999 (1999-06-27), XP010346761 ISBN: 0-7803-5421-4
• COCHRANE D: "Passive Cancellation of Common-Mode Electromagnetic interference in switching power converters" 10. August 2001 (2001-08-10), XP003016912
• MANJREKAR M D; LIPO T A: "An auxiliary zero state synthesizer to reduce common mode voltage in three-phase inverters" 3. Oktober 1999 (1999-10-03), XP010355205 ISBN: 0-7803-5589-X

## Beschreibung

### Technisches Gebiet

Die Erfindung bezieht sich auf einen Wechselrichter zum Umformen einer elektrischen Gleichspannung in einen Wechselstrom oder eine Wechselspannung. Derartige Stromrichter werden bspw. zur elektrischen Energieeinspeisung in das öffentliche Stromnetz oder zur Bildung eines autarken Inselnetzes in Fällen eingesetzt, in denen lediglich Gleichspannungsenergiequellen zur Verfügung stehen, wie z. B. Photovoltaikanlagen, Brennstoffzellen, Batterien, etc..

### Stand der Technik

Bei einem Wechselrichter zur Einspeisung von Energie in ein vorhandenes Wechselspannungsnetz gilt es, einen Wechselstrom zu erzeugen, der in Bezug auf Phasenlage und Amplitude an den Potenzialverlauf der Wechselspannung, vorzugsweise einer 50 oder 60 Hz sinusförmig ausgebildeten Netzspannung, anzugleichen ist. Bei einem Wechselrichter zur Speisung eines autarken Inselnetzes hingegen gilt es, eine in Spannung und Frequenz stabile Wechselspannung zu erzeugen. Zum Betrieb beliebiger kapazitiver und induktiver Verbraucher muss ein solcher Wechselrichter in der Lage sein, Blindleistung abzugeben bzw. aufzunehmen.

In an sich bekannter Weise dienen hierzu ein- oder dreiphasige Wechselrichter mit und ohne Transformator. Ein Überblick über die Vielzahl der dabei möglichen Ausführungsformen derartiger Wechselrichter findet sich in folgenden Quellennachweisen:

[1] Myrzik, Johanna, Topologische Untersuchungen zur Anwendung von tief/hochsetzenden Stellern für Wechselrichter / Johanna Myrzik. - Kassel: kassel univ. press, 2001, Zugl.: Kassel, Univ., Diss. 2000, ISBN 3-933146-62-3;
[2] Manfred Meyer, Leistungselektronik, Einführung, Grundlagen, Überblick, Springer-Verlag, Berlin Heidelberg New York London Paris Tokyo Hong Kong Barcelona 1990; und
[3] POWER ELECTRONICS, Converters, Applications and Design, Second Edition, JOHN WILEY & SONS, INC., New York Chichester Brisbane Toronto Singapore, 1989, 1995.

Bei den genannten Anwendungsfällen stehen immer ein bei allen Belastungen hoher Umwandlungswirkungsgrad, ein gutes EMV-Verhalten, ein geringes Volumen und Gewicht sowie ein niedriger Preis im Vordergrund. Eine galvanische Trennung zwischen Gleich- und Wechselspannungsseite ist im Allgemeinen nicht erforderlich.

Eine unter diesen Randbedingungen bislang günstigste Schaltung stellt eine transformatorlose Vollbrückenschaltung dar, die detailliert in [3] und [1] beschrieben ist. Hier werden ebenfalls die im weiteren näher erläuterten unterschiedlichen Taktungsarten der Vollbrückenschaltung dargestellt. Vorteilhaft bei dieser Topologie ist ein hoher Umwandlungswirkungsgrad und ein geringes Volumen und Gewicht. Nachteilig ist jedoch, abhängig von der eingesetzten Taktungsart, ein schlechtes EMV-Verhalten auf der Eingangsseite sowie teilweise das Fehlen eines 4-Quadranten-Betriebes (Blindleistungsfähigkeit).

Ferner sind aus obigem Beitrag von Myrzik transformatorlose Wechselrichter-Topologien bekannt, die aus einer Kombination von tief- und hochsetzenden Stellern (Cuk- und Zeta-Wandlern) hervorgehen. Diese haben gegenüber den oben genannten Brückenschaltungen den Vorteil, dass die Eingangsspannung betragsmäßig sowohl kleiner als auch größer als der Maximalwert (Amplitude) der sinusförmigen Netzspannung sein kann. Bei der Brückenschaltung hingegen muss sie immer größer als die Netzspannungsamplitude sein, um eine Einspeisung in das Netz zu ermöglichen.

Auf einem vergleichbaren Ansatz beruhen auch die in den DE 196 42 522 C2 und DE 197 32 218 C1 beschriebenen transformatorlosen Topologien, wobei bei diesen auf hoch-/tiefsetzenden Wandlern bzw. Cuk- und Zeta-Wandlern basierenden Schaltungen als Vorteil insbesondere die elektrische Verbindung eines der Solargeneratoranschlüsse mit einem festen Potenzial (Neutralleiter) genannt wird, wodurch sich Vorteile für das EMV-Verhalten ergeben.

Bei allen zuletzt genannten Topologien ist jedoch als wesentlicher Nachteil zu nennen, dass entweder die gesamte oder zumindest ein großer Anteil der zum Ausgang übertragenen Energie in einer Drosselspule zwischengespeichert oder auch über Koppelkondensatoren zum Ausgang übertragen werden muss. Daraus resultiert bei allen Schaltungen ein gegenüber der einfachen Brückenschaltung deutlich geringerer Wirkungsgrad. Weiterhin sind sie z. T. sehr komplex und regelungstechnisch schwer beherrschbar.

Aus der EP 0 203 571 B1 geht weiterhin ein gattungsgemäßer Wechselrichter hervor, der es ermöglicht, im Betrieb als Inselwechselrichter kurzzeitig einen Ausgangsstrom zu erzeugen, der ein Vielfaches des Nennstromes beträgt. Dieser hohe Strom wird benötigt, um im Falle eines Kurzschlusses standardmäßige Sicherungsautomaten zum Auslösen zu bringen. Das dort beschriebene Verfahren ist also im normalen Betrieb nicht im Einsatz, sondern wird durch eine entsprechende Auswerteschaltung ausschließlich im Kurzschlussfall aktiviert.

Das Dokument US 5852558A offenbart darüber hinaus einen Wechselrichter mit zwei Gleichspannungsanschlüssen, zwischen denen eine Brückenschaltung vorgesehen, die wenigstens zwei Paralleläste ist aufweist , die jeweils zwei in Reihe geschaltete Schaltereinheiten vorsehen, zu denen jeweils eine Gleichrichterdiode parallel geschaltet ist, sowie mit wenigstens zwei Wechselspannungsanschlüssen, von denen jeder einzeln über eine Verbindungsleitung, in der jeweils eine Drosselinduktivität vorgesehen ist, mit einem der Paralleläste der Brückenschaltung jeweils wischen zwei Schaltereinheiten über einen Verbindungsknoten verbunden ist, wobei zwischen den wenigstens zwei Verbindungsleitungen zwei elektrische Verbindungspfade vorgesehen sind, in denen jeweils ein Schalter sowie eine in Reihe geschaltete Gleichrichterdiode vorgesehen sind, und wobei die Gleichrichterdioden in den einzelnen Verbindungsfaden zueinander in entgegengesetzter Durchlassrichtung geschaltet sind, wobei eine Steuereinheit die Schalter.

Die weiteren Ausführungen sollen im einzelnen das bestehende Wechselrichterproblem erhellen, insbesondere unter Bezugnahme auf einphasige, transformatorlose Wechselrichter, doch sei an dieser Stelle angemerkt, dass die im weiteren beschriebenen Maßnahmen grundsätzlich auch auf Wechselrichter jeweils mit Transformator übertragbar sind. Nur aus Gründen der Vollständigkeit sei ferner darauf hingewiesen, dass neben einphasigen Wechselrichtern auch mehrphasig arbeitende Geräte, vorzugsweise 3-phasige Wechselrichter, existieren, mit denen bspw. die Umwandlung von Gleichspannung in drei jeweils um 120° phasenverschobene periodische Strom- bzw. Spannungsverläufe möglich ist. Auch auf derartige, mehrphasige Wechselrichtersysteme können die im weiteren dargelegten Ausführungen Anwendung finden.

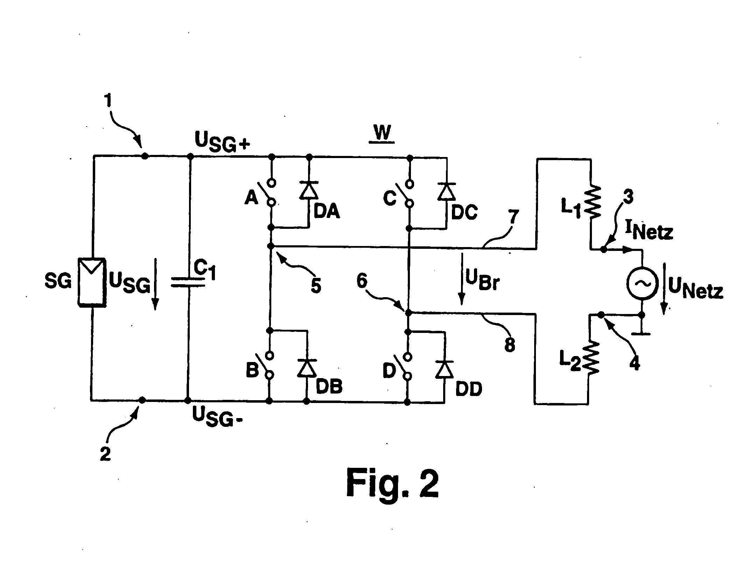

Betrachtet werde im weiteren die oben genannte und an sich bekannte Schaltungstopologie eines einphasigen, transformatorlosen Wechselrichters, der gemäß dem bekannten Ausführungsbeispiel in Figur 2 zwei Gleichspannungsanschlüsse 1, 2, mit denen in diesem Beispiel ein externer Solargenerator SG als Gleichspannungsquelle verbunden ist, sowie zwei Wechselspannungsanschlüsse 3, 4 vorsieht, die entweder mit dem konventionellen 50 Hz-Stromnetz verbunden sind oder im Falle des Inselbetriebes an die elektrischen Verbraucher angeschlossen sind. Zur Umwandlung der konstanten Solargeneratorgleichspannung $U_{SG}$ in einen für die Netzeinspeisung geeigneten Wechselstrom oder in eine im Inselbetrieb erforderliche Wechselspannung sieht der einphasige, transformatorlose Wechselrichter W einen Pufferkondensator $C_1$ vor, der parallel zu einer Vollbrücke geschaltet ist, bestehend aus vier Schaltereinheiten A, B, C, D sowie jeweils mit diesen antiparallel geschalteten, als Freilaufdioden bezeichneten Gleichrichterdioden DA, DB, DC sowie DD.

Die einzelnen Schaltereinheiten A, B, C, D sind als Hochfrequenzschalter ausgebildet, die geeignet sind, Schaltvorgänge mit Frequenzen von bis zu einigen 100 kHz zu realisieren. Derartige Schalter sind vorzugsweise als MOS-Feldeffekt-Transistoren oder als IGBT (Insulated Gate Bipolar Tansistor) ausgebildet.

Ein Brückenabgriff erfolgt jeweils mittig in den Parallelästen der Brückenschaltung an den Verbindungsknoten 5, 6 zwischen jeweils den Schaltereinheiten A, B sowie C, D mittels der Verbindungsleitungen 7, 8. Beide Verbindungsleitungen 7, 8 sind jeweils über eine Drosselinduktivität $L_1$ bzw. $L_2$ mit den Wechselspannungsanschlüssen 3, 4 verbunden. Zwischen den Verbindungsleitungen 7, 8 liegt die Brückenspannung $U_{Br}$ an. Weitere, für einen sicheren Betrieb der in Figur 2 dargestellten Wechselrichteranordnung erforderliche Bauteile sind aus Gründen besserer Übersichtlichkeit nicht dargestellt, wie bspw. Filter zur Verbesserung der elektromagnetischen Verträglichkeit (EMV) sowie parasitäre Elemente, insbesondere Kapazitäten.

Zur Umwandlung der Solargeneratorspannung $U_{SG}$ in einen zur Netzeinspeisung erforderlichen Wechselstrom oder in eine im Inselbetrieb erforderliche Wechselspannung gilt es, die Schaltereinheiten A, B, C, D mit einem bestimmten, hochfrequenten Taktmuster, das Schaltfrequenzen zwischen wenigen kHz bis zu einigen 100 kHz aufweisen kann, in aufeinander abgestimmter Weise zu öffnen und zu schließen, um zeitdiskret voneinander unterscheidbare Spannungspulse zu erzeugen, deren Potenziallage auf die extern angelegte bzw. im Inselbetrieb zu erzeugende Wechselspannung $U_{Netz}$ abgestimmt wird. Mit Hilfe der in den Verbindungsleitungen 7, 8 vorgesehenen Drosselinduktivitäten $L_1$, $L_2$ ist es möglich, an den Ausgängen der Wechselspannungsanschlüsse 3, 4 einen glatten, sinusförmigen Strom- bzw. Spannungsverlauf zu erhalten.

Grundsätzlich werden drei unterschiedliche Taktungsmuster, mit denen die Schaltereinheiten A, B, C, D innerhalb der konventionellen Brückenschaltung angesteuert werden, voneinander unterschieden.

Im Falle der sog. symmetrischen Taktung werden stets die sich diagonal gegenüberliegenden Schaltereinheiten, d. h. A und D oder B und C zeitsynchron geschlossen bzw. geöffnet. Die Ansteuerung der einzelnen Schaltereinheiten erfolgt für eine erfolgreiche Einspeisung elektrischer Energie in das Netz derart, dass während einer positiven Halbwelle der an den Wechselspannungsanschlüssen 3, 4 anliegenden Netzwechselspannung die Schaltereinheiten A, D gemäß eines festgelegten Taktmusters, bspw. auf Basis einer Pulsweiten-Modulation (PWM), hochfrequent geschlossen und geöffnet werden, während die Schaltereinheiten B und C im geöffneten Zustand verharren oder auch gegenphasig zu den Schaltern A, D angesteuert werden. Während der Öffnungsphasen der Schalter A und D kommutiert der Strom durch die Drosselspulen $L_1$, $L_2$ auf die diagonal gegenüberliegenden Freilaufdioden DB und DC bzw. die geschlossenen Schalter B, C. Im umgekehrten Fall einer vom Netz vorgegebenen negativen Halbwelle, werden die Schaltereinheiten B und C nach dem entsprechenden Taktmuster geschlossen und geöffnet, während die Schaltereinheiten A und D in der geöffneten Stellung verbleiben oder auch gegenphasig zu den Schaltern B, C angesteuert werden. Jetzt kommutiert der Drosselstrom auf die Freilaufdioden DA und DD bzw. die geschlossenen Schalter A, D.

Dies vorausgesetzt führt zu folgenden elektrischen Eigenschaften des Wechselrichters: Die Brückenspannung $U_{Br}$ nimmt jeweils im Falle geschlossener Schaltereinheiten A und D bzw. leitender Freilaufdioden DA und DD die Spannung +USG an, und im Falle der geschlossenen Schaltereinheiten B und C bzw. leitender Freilaufdioden DB und DC die Spannung -US$_G$. Setzt man ferner voraus, dass die Drosselinduktivitäten $L_1$ und $L_2$ ideal gleich ausgebildet sind, so teilt sich die Solargeneratorspannung $U_{SG}$ in allen Fällen der symmetrischen Taktung symmetrisch zu dem durch die extern angelegte Wechselspannung definierten Bezugspotenzial (Momentanwert der Netz-Wechselspannung) auf.

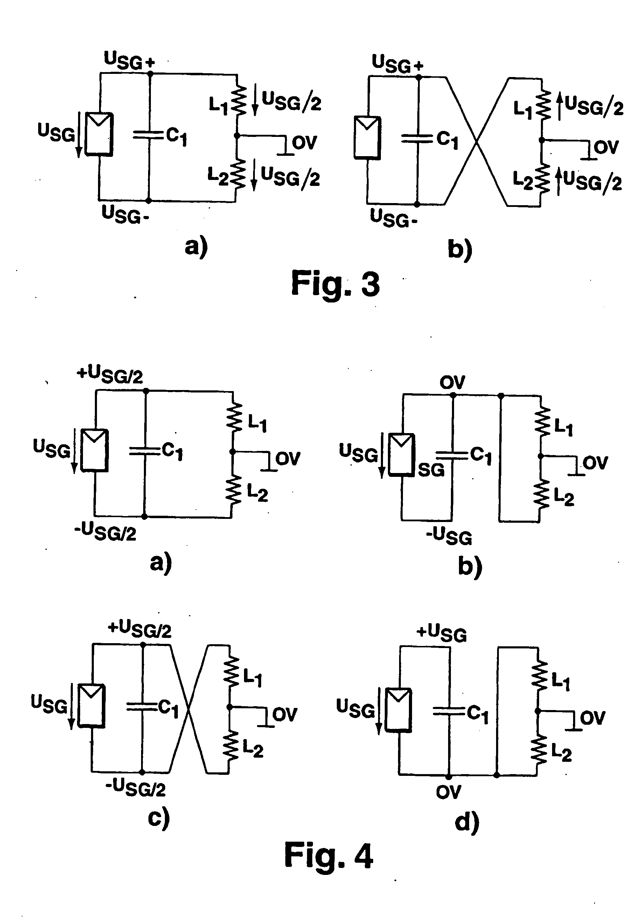

Zur Verdeutlichung dieser Verhältnisse sei auf die Figuren 3a und 3b Bezug genommen. Im Fall der Figur 3a sind die Schaltereinheiten A und D geschlossen bzw. DA und DD leitend, und es wird ein externes Bezugspotenzial von 0 V angenommen. Da sich die Solargeneratorspannung wie oben dargestellt symmetrisch zum Bezugspotenzial aufteilt, liegen die beiden Anschlussleitungen des Solargenerators auf den Potenzialen + $U_{SG}$/2 bzw. -$U_{SG}$/2.

In Figur 3b ist der Fall der geschlossenen Schaltereinheiten B und C bzw. leitender Freilaufdioden DB und DC dargestellt, der zu den gleichen Potenzialverhältnissen an den Anschlussleitungen des Solargenerators führt. Die Anschlussleitungen des Solargenerators liegen gemäß Figur 3a bzw. Figur 3b trotz hochfrequenter Taktung der einzelnen Schaltereinheiten A, B, C, D konstant auf den Potenzialen +$U_{SG}$/2 bzw. - $U_{SG}$/2 .

Berücksichtigt man weiterhin die an den Anschlussleitungen des Wechselrichters anliegende externe Wechselspannung, die sich ebenfalls aufgrund der Induktivitäten $L_1$ und $L_2$ symmetrisch auf beide Anschlussleitungen aufteilt, so führt dies an den Solargeneratoranschlüssen zu einer mit halber Netzamplitude $U_{Netz}$/2 niederfrequent schwankenden Spannung, die keinerlei Sicherheitsprobleme sowie auch Probleme in Bezug auf die elektromagnetische Verträglichkeit aufwirft.

Jedoch sind mit der symmetrischen Betriebsweise des Wechselrichters zwei Nachteile unvermeidbar verbunden. Betrachtet man bspw. während der positiven Halbwelle der Netzspannung jene Zeiträume, in denen die Schaltereinheiten A und D geöffnet sind und berücksichtigt man, dass der innerhalb der Drosselinduktivitäten $L_1$ und $L_2$ fließende Spulenstrom aufgrund von Entmagnetisierungsvorgängen innerhalb der Drosselinduktivitäten weiter aufrecht bleibt, so kommutiert dieser Spulenstrom während der sog. "Freilaufphase" über die Dioden DB und DC bzw. die geschlossenen Schalter B, C zurück in den Pufferkondensator $C_1$, was mit erheblichen Verlusten verbunden ist, wodurch letztlich der Wirkungsgrad des Wechselrichters entscheidend negativ beeinflusst wird.

Weiterhin entstehen beim periodischen Einschalten der Schalter A, D erhebliche Schaltverluste aufgrund der nicht idealen dynamischen Eigenschaften der Freilaufdioden DB und DC, entsprechend auch in der negativen Halbwelle.

Hinzu kommt, dass während der Kommutierung des Spulenstromes durch die Dioden DB und DC bzw. die geschlossenen Schalter B, C in den Kondensator $C_1$ über den Drosselinduktivitäten $L_1$ und $L_2$ die Summe aus Eingangsspannung (z. B. die Solargeneratorspannung $U_{SG}$) und momentaner Netzspannung mit umgekehrter Polarität anliegt. Ein diesbezügliches Ersatzschaltbild ist der Figur 3b zu entnehmen, das gleichsam auch auf den vorstehend geschilderten Fall der Freilaufphase Anwendung findet. Durch die hohe Spannung werden die Drosselinduktivitäten $L_1$, $L_2$ schnell entmagnetisiert, wodurch hohe Stromschwankungen, ein sogenannter Stromrippel, im Ausgangsstrom entstehen, die letztlich zu merklichen Verlusten in der Spule und zu EMV-Problemen führen.

Bei der sog. unsymmetrische Taktung treten im Gegensatz zur vorstehend erläuterten symmetrischen Taktung folgende, jeweils paarweise geschlossene Schalterstellungen der Schaltereinheiten A, B, C, D auf: A und D oder B und C (wie vorstehend zum symmetrischen Fall geschildert) oder A und C oder B und D sind gleichzeitig geschlossen und wechseln sich unmittelbar in bestimmter Reihenfolge ab, ohne dabei einen Schaltungszustand zuzulassen, in dem alle vier Schaltereinheiten A, B, C, D dauerhaft geöffnet sind.

Diese Taktung ist mit folgenden Vorteilen verbunden: Im Falle der als unsymmetrisch bezeichneten zusätzlichen Schalterkonstellationen, in denen A und C oder B und D gleichzeitig geschlossen sind, reduziert sich die Brückenspannung $U_{Br}$ auf 0 V. Dieser auch als "Nullzeiger" bezeichnete Schaltungszustand verhindert somit ein Kommutieren des Spulenstromes über etwaige Freilaufdioden hin zum Pufferkondensator $C_1$, wodurch der Wirkungsgrad des Wechselrichters entscheidend gegenüber der symmetrischen Taktung verbessert wird. Weiterhin liegt im unsymmetrischen Schaltungszustand nicht die Summe aus momentaner Netzspannung und Solargeneratorspannung $U_{SG}$ über den Drosselinduktivitäten $L_1$, $L_2$ an, sondern lediglich die momentane Netzspannung $U_{Netz}$, die zum Abbau des Spulenstroms beiträgt. Aufgrund der sehr viel geringeren Spannung bilden sich die Stromschwankungen (Stromrippel) im Ausgangsstrom erheblich kleiner aus, wodurch der Wirkungsgrad steigt und auch die elektromagnetische Verträglichkeit verbessert wird.

Jedoch ist auch mit der unsymmetrischen Taktung ein Nachteil unvermeidbar verbunden, der anhand der Figuren 4a bis 4d dargestellt ist. Nur aus Gründen leichteren Verständnisses sei angenommen, dass die momentane Wechselspannung in den der Figuren 4a - d entnehmbaren Ersatzschaltbildern 0 V entspricht. Die Ersatzschaltbilder gemäß der Figuren 4a und 4c entsprechen den Schaltungszuständen bei geschlossenen Schaltereinheiten A und D sowie B und C, also entsprechend der symmetrischen Taktung. In beiden Fällen liegen an den Anschlussleitungen des Solargenerators SG konstante Potenziale an, nämlich + $U_{SG}$/2 bzw. - $U_{SG}$/2. In den in den Figuren 4b und 4d dargestellten Schaltungszuständen sind die Schalter A und C bzw. B und D geschlossen. Hierbei liegen die Anschlussleitungen des Solargenerators SG jedoch nicht mehr auf den konstanten Potenzialen + $U_{SG}$/2 bzw. - $U_{SG}$/2, sondern sie springen im Fall der Figur 4b auf die Werte 0 V bzw. - $U_{SG}$ sowie im Fall der Figur 4d auf + $U_{SG}$ bzw. 0 V.

Bei einer von 0 V verschiedenen Netzspannung $U_{Netz}$ teilt sich diese in allen Taktphasen ebenfalls symmetrisch auf die beiden Drosselinduktivitäten $L_1$ und $L_2$ auf, so dass bspw. an der positiven Solargenerator-Anschlussleitung periodisch folgende Potenziale auftreten: ($U_{SG}$/2 + $U_{Netz}$/2), ($U_{Netz}$/2) sowie ($U_{SG}$ + $U_{Netz}$/2).

Eingedenk der Tatsache, dass typische Solargeneratorspannungen im Bereich zwischen 400 V und 750 V liegen, können unter Berücksichtigung des Potenzialbeitrages durch die Netzspannung an den Anschlußleitungen des Solargenerators Potenzialschwankungen zwischen 0 V und ca. 1 kV auftreten. Diese Potenzialschwankungen treten jedoch als hochfrequente Spannungssprünge mit Frequenzen von bis zu mehr als 100 kHz auf und führen zu überaus großen Ableitströmen über parasitäre Kapazitäten, wie sie an großflächigen Solargeneratoren typischerweise vorzufinden sind, wodurch die elektromagnetische Verträglichkeit derartiger Systeme entscheidend verschlechtert wird. Zudem stellen die hochfrequenten Spannungssprünge ein beträchtliches Gefährdungspotenzial bei Berührung der isolierten Moduloberflächen aufgrund einer kapazitiven Kopplung dar.

Eine dritte, in der vorstehenden Dissertation von Myrzik [1] beschriebene Taktungsart, stellt das sog. Einphasen-Chopping dar. Hierbei wird ein Brückenzweig, z. B. die Schalter C, D, nur mit der Netzfrequenz (50 Hz oder 60 Hz) periodisch umgeschaltet, während der andere Brückenzweig hochfrequent sinusmoduliert getaktet wird. So ist z. B. während der positiven Halbwelle der Schalter D permanent geschlossen, und die Schalter A, B werden getaktet. Hierdurch ergibt sich für den Zeitabschnitt, in dem sowohl der Schalter B als auch D gleichzeitig geschlossen sind, eine Brückenspannung von 0 V (Nullzeiger), so dass auch mit dieser Taktungsart wie bei der oben beschriebenen unsymmetrischen Taktung ein sehr guter Wirkungsgrad erzielt wird.

Wie oben ergibt sich aber auch beim Einphasen-Chopping der gravierende Nachteil, dass abwechselnd entweder der positive oder der negative Pol des Solargenerators über die Schalter C, D mit dem Neutralleiter verbunden wird. Das Pozential des Solargenerators springt also periodisch um die Höhe der Solargeneratorspannung gegenüber Erdpotenzial, wodurch, wie oben dargestellt, erhebliche EMV-Probleme aufgeworfen werden.

## Darstellung der Erfindung

Ausgehend von dem vorstehend geschilderten Stand der Technik liegt der Erfindung die Aufgabe zugrunde, einen Wechselrichter anzugeben, der die Vorteile der vorstehend erläuterten symmetrischen und unsymmetrischen Taktung sowie des Einphasen-Choppings in sich vereint und gleichzeitig die mit der vorstehend genannten Technik verbundenen Nachteile vermeidet. Insbesondere soll ein Wechselrichter unter Vermeidung des Einsatzes komplizierter und kostenaufwändiger Schaltungstopologien angegeben werden, der über einen verbesserten Wirkungsgrad und eine bessere elektromagnetische Verträglichkeit als bisher bekannte Wechselrichter verfügt. Zudem gilt es, eine Möglichkeit für einen wahlweisen Netz- oder Inselbetrieb des Wechselrichters zu schaffen.

Die der Erfindung zugrunde liegenden Aufgabe wird durch die Merkmale des Anspruchs 1 gelöst. Weitere Vorteile und Ausgestaltungen der vorliegenden Erfindung ergeben sich aus den Unteransprüchen, sowie den Verwendungsansprüchen zusammen mit der Beschreibung.

Wie im einzelnen aus den weiteren Ausführungen hervorgeht, werden die in Anspruch 1 definierten Schalter E und F während des Betriebes des Wechselrichter getaktet betrieben.

An dieser Stelle sei vermerkt, dass insbesondere eine Kombination aus Schalter und Gleichrichterdiode auch in Ausbildung nur eines einzigen elektronischen Bauelementes denkbar ist, dessen Einsatz durchaus auch unter dem allgemeinen Erfindungsgedanken zu subsummieren ist.

Zur einfacheren Darstellung des Erfindungsgedankens sei jedoch zunächst auf einen Wechselrichter Bezug genommen, der gemäß Anspruch 1 zwei parallel geführte Verbindungspfade zwischen den zwei Verbindungsleitungen vorsieht.

Mit der erfindungsgemäßen Maßnahme des Vorsehens der zusätzlichen Verbindungspfade zwischen den Verbindungsleitungen zum Abgriff der Brückenspannung eröffnet sich die Möglichkeit für alternative Freilaufpfade, längs der sich der Drosselstrom aufgrund Entmagnetisierungsvorgänge der Drosselinduktivitäten ausbreiten kann.

Hierdurch wird der Wirkungsgrad des Wechselrichters erheblich verbessert, da keine mit der Energierückspeisung in den Pufferkondensator verbundenen Energieverluste auftreten können. Zugleich liegt im Freilauffalle nicht wie beim Stand der Technik (symmetrische Taktung) die Summe aus Solargeneratorspannung und momentaner Netzspannung über den Drosselinduktivitäten an, sondern lediglich die momentane Netzspannung, wodurch die beim Stand der Technik (symmetrische Taktung) als nachteilhaft aufgezeigten Stromrippel im Ausgangsstrom deutlich reduziert werden können.

Schließlich ermöglichen die zusätzlichen, erfindungsgemäß vorgesehenen Freilaufpfade während der Freilaufphase eine vollständige ohmsche Entkopplung zwischen den Gleichspannungsanschlüssen und der damit verbundenen Gleichspannungsquelle, vorzugsweise einem Solargenerator, und den Wechselspannungsanschlüssen. Dies hat in vorteilhafter Weise zur Folge, dass hochfrequente Spannungssprünge an den Anschlussleitungen des Solargenerators, wie sie beim Stand der Technik (unsymmetrische Taktung bzw. Einphasen-Chopping) auftreten, prinzipiell vermieden werden. Damit ist das eingangs erläuterte Gefährdungspotenzial sowie die diskutierte Problematik in Bezug auf die elektromagnetische Verträglichkeit beim Betrieb eines derartigen Wechselrichters zu einem Grad der Unbedenklichkeit reduziert.

Weitere, mit dem erfindungsgemäßen ausgebildeten Wechselrichter verbundene Vorteile, die sich nicht zuletzt auf die Möglichkeit einer kostengünstigen Realisierung der hierfür erforderlichen Schaltungstopologie beziehen, werden im Weiteren unter Bezugnahme auf konkrete Ausführungsbeispiele näher erläutert.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1 schematisierter Schaltungsaufbau eines erfindungsgemäß ausgebildeten Wechselrichters,

Fig. 2 Wechselrichtertopologie gemäß Stand der Technik,

Fig. 3 Ersatzschaltbilder zur Erläuterung der symmetrischen Taktung beim bekannten Wechselrichter gem. Figur 2,

Fig. 4 Ersatzschaltbilder zur Erläuterung der unsymmetrischen Taktung beim bekannten Wechselrichter gem. Figur 2,

Fig. 5 Ersatzschaltbilder zur Erläuterung des Potenzialverhaltens beim erfindungsgemäß ausgebildeten Wechselrichter,

Fig. 6 Spannungsverlauf an der Anschlussleitung eines Solargenerators,

Fig. 7 Darstellung zum Taktverhalten einzelner Schaltereinheiten,

Fig. 8 Darstellung des Taktverhaltens einzelner Schaltereinheiten,

Fig. 9 Schematisierter Schaltungsaufbau eines erfindungsgemäß ausgebildeten Wechselrichters im Inselbetrieb sowie

Fig. 10 Darstellung zum Taktverhalten einzelner Schaltereinheiten im Inselbetrieb.

## Wege zur Ausführung der Erfindung, gewerbliche Verwendbarkeit

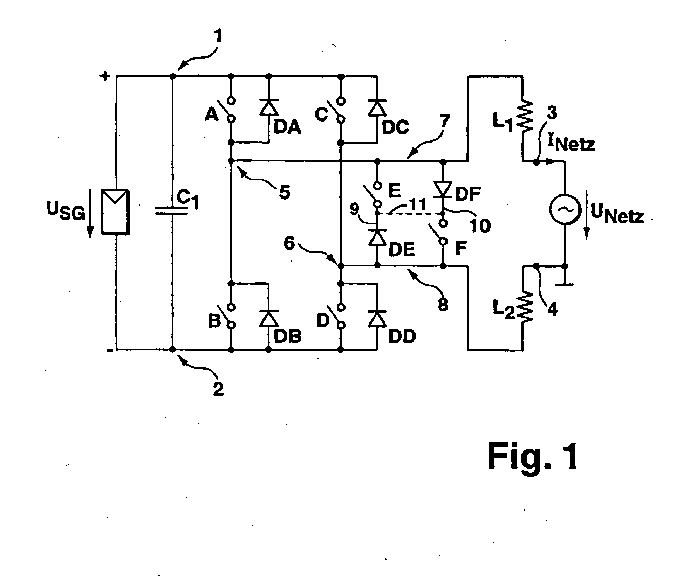

Gleichsam dem unter Bezugnahme auf Figur 2 als nächstkommenden Stand der Technik beschriebenen Schaltungsaufbau für einen Wechselrichter, weist auch der erfindungsgemäß ausgebildete Wechselrichter gemäß Figur 1 eine zwischen den Gleichspannungsanschlüssen 1, 2 geschaltete Parallelschaltung bestehend aus einem Energiezwischenspeicher $C_1$, vorzugsweise in Form eines Pufferkondensators, sowie eine Brückenschaltung auf. Die Brückenschaltung weist gleichsam der in Figur 2 dargestellten Brückenschaltung vier Schaltereinheiten A, B, C, D auf, zu denen jeweils Gleichrichterdioden DA, DB, DC, DD parallel geschaltet sind. Der erfindungsgemäße Unterschied zu der bekannten Topologie gemäß Figur 2 besteht im Vorsehen zweier zusätzlicher elektrischer Verbindungspfade 9, 10 zwischen den Verbindungsleitungen 7, 8 zum Abgriff der Brückenspannung $U_{Br}$ an den Verbindungsknoten 5, 6. In den einzelnen Verbindungspfaden 9, 10 befinden sich jeweils ein Schalter E, F sowie eine Gleichrichterdiode DE, DF, die zueinander in entgegengesetzter Durchlassrichtung geschaltet sind. Alle übrigen Schaltungskomponenten entsprechen der in Figur 2 dargestellten, bekannten Schaltungsanordnung, so dass auf die einzelnen Komponenten nicht weiter Bezug genommen werden muss.

Selbstverständlich ist die Bauelementkombination aus Schalter E und Diode DE bzw. Schalter F und Diode DF in den einzelnen Verbindungspfaden 9, 10 auch durch gleichwirkende Bauelementkomponenten zu ersetzen, die in den einzelnen Verbindungspfaden 9,10 über die gleichen Stromdurchlasseigenschaften verfügen wie die Schalter E bzw. F in Kombination jeweils mit den Dioden DE bzw. DF. Zwischen den Verbindungspfaden kann hierzu auch optional die gestrichelt eingezeichnete diagonale Verbindung 11 eingefügt sein, wodurch sich das Verhalten der Schaltung nicht grundsätzlich ändert, aber in der Praxis die vorteilhafte Zusammenfassung des Schalters E und der Diode DF bzw. F und DE in einem Bauteil, bspw. eines MOS-Fet mit parasitärer Diode oder in Form eines IGBT/Diode-Co-Pack, ermöglicht.

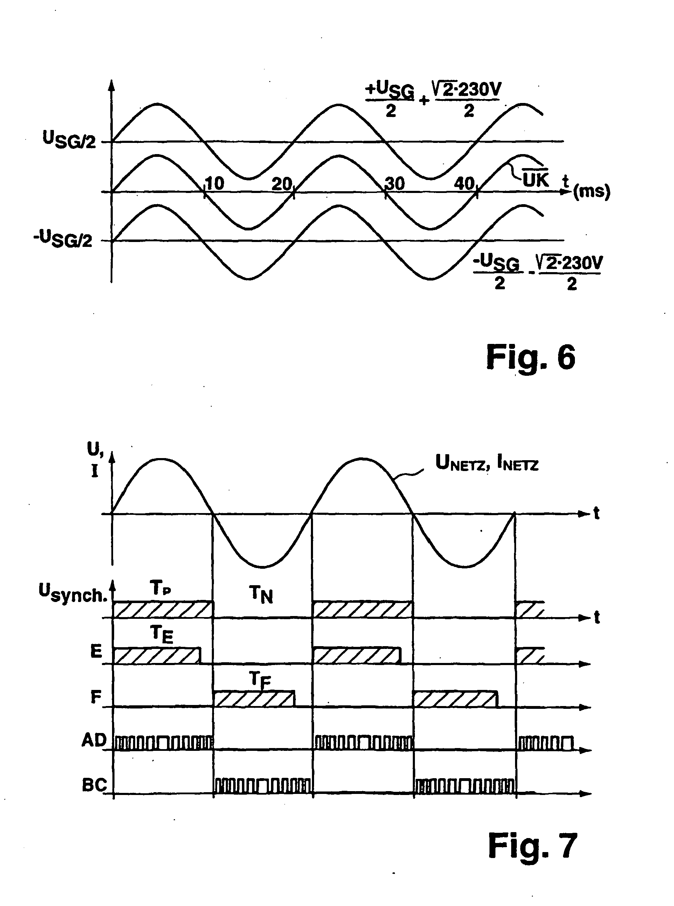

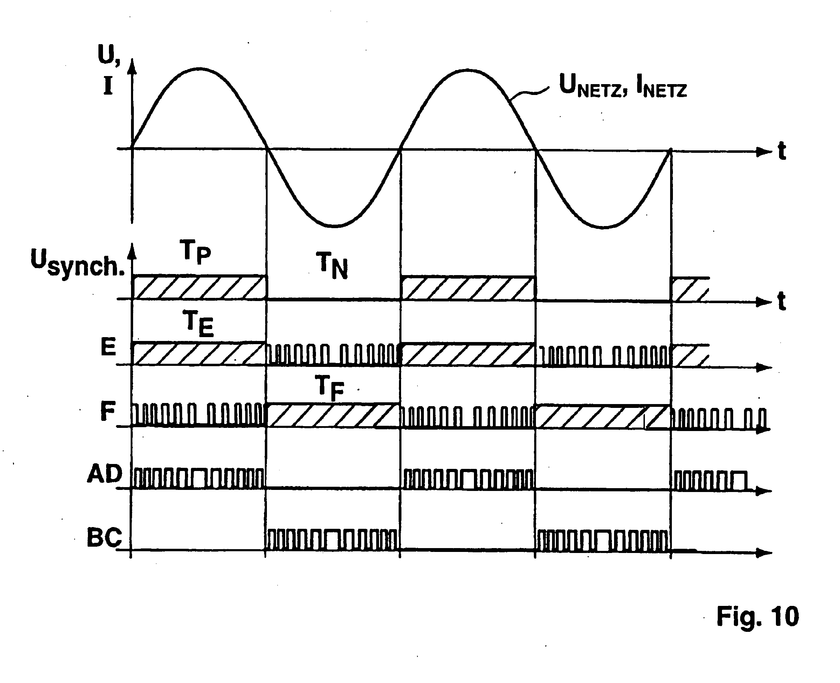

Die Betriebsweise des erfindungsgemäß ausgebildeten Wechselrichters erfolgt nach der eingangs erläuterten symmetrischen Taktung der in der Brückenschaltung vorgesehenen Schaltereinheiten A, B, C, D, d. h., in Abhängigkeit der Polarität der Halbwellen der Netzspannung $U_{Netz}$ werden die Schalterpaare A und D bzw. B und C nach einem festgelegten Taktmuster geschlossen und geöffnet. Das Zeitverhalten, mit dem die einzelnen Schaltereinheiten A-D geschaltet werden, ist in den Figuren 7 und 10 dargestellt.

Figur 7 gibt die Taktung in der Betriebsart "Netzeinspeisung" wieder, bei der kein Blindleistungsbedarf besteht, also zu keiner Zeit ein Rückfluss von Energie aus dem Netz in den Pufferkondensator $C_1$ bzw. in die Gleichspannungsquelle $U_{SG}$ erfolgt.

Das in Figur 10 dargestellte Taktungsschema hingegen ermöglicht einen vollständigen sogenannten 4-Quadranten-Betrieb, d. h., der Wechselrichter dient als Spannungsquelle zur Energieversorgung eines Verbrauchers, wobei der Wechselrichter ausgangsseitig nicht mit einem fest vorgegebenen Netzwechselspannungspotenzial verbunden ist. Dieser Fall entspricht dem eingangs erwähnten Inselbetrieb. Die Auswahl der beiden Taktungsarten kann je nach Anwendungsfall erfolgen.

In dem in Figur 7 dargestellten Zeitdiagrammen entspricht die oberste Diagrammdarstellung dem zeitlichen Verlauf der extern angelegten Netzspannung $U_{Netz}$. Mit Hilfe einer geeigneten Komparatorschaltung, auf die nicht im einzelnen eingegangen wird, kann eine rechteckförmige Synchronisationsspannung $U_{synch.}$ erhalten werden, die zu Zeiten der positiven Halbwelle der Netzspannung einen konstanten positiven Spannungswert $T_P$ und zu Zeiten der negativen Halbwelle bspw. 0 V annimmt. In Abhängigkeit der Synchronisationsspannung $U_{synch.}$ und somit letztlich der Netzspannung werden die Schaltereinheiten A, D sowie B, C in Figur 7 angesteuert.

Bspw. werden im Falle einer positiven Halbwelle die Schaltereinheiten A, D synchron zu Beginn der positiven Halbwelle in kurz aufeinander folgenden Taktpulsen geschlossen und geöffnet, im Bereich der zeitlichen Mitte der positiven Halbwelle verlängern sich die Zeitabschnitte im geschlossenen Zustand, bis sie gegen Ende der positiven Halbwelle in gleicher Weise wie zu Anfang nur kurzzeitig geschlossen werden. Mit dem gleichen Taktmuster werden die Schaltereinheiten B, C moduliert, sofern die Halbwelle der Wechselspannung negativ ist. Die Art und Weise einer derartigen Schalterbetätigung ist eine an sich unter dem Begriff Pulsweitenmodulation (PWM) bekannte Technik. Wie bereits einleitend erwähnt, werden die Schaltereinheiten A, B, C, D mit Schaltfrequenzen von bis zu einigen 100 kHz beaufschlagt.

Im Gegensatz zu der hochfrequenten Taktweise, mit der die Schaltereinheiten A, B, C, D angesteuert werden, werden die Schalter E, F in den zusätzlichen Verbindungspfaden 9,10 zeitsynchron mit der Wechselfrequenz der Netzspannung $U_{Netz}$ betrieben, d. h. üblicherweise mit 50 Hz. So wird im dargestellten Beispiel gemäß Figur 7 der Schalter E während der überwiegenden Zeitdauer der positiven Halbwelle geschlossen, während der Schalter F geöffnet ist. Entsprechend umgekehrt schließt der Schalter F während der überwiegenden Zeitdauer der negativen Halbwelle bei geöffneter Schalterstellung E.

Betrachtet man nun jene kurzzeitigen Momente, in denen bspw. der Schalter E geschlossen ist, also während der positiven Halbwelle der Netzspannung, und bei geöffneter Schalterstellung der Schalter A, D, so kommutiert der positive Spulenstrom auf die Diode DE und gelangt somit nicht zum Pufferkondensator $C_1$ zurück. Ebenso ist im Falle der negativen Halbwelle der Schalter F geschlossen und bei geöffneter Schalterstellungen B, C kommutiert der Spulenstrom auf die Gleichrichterdiode DF (siehe hierzu Figur 1).

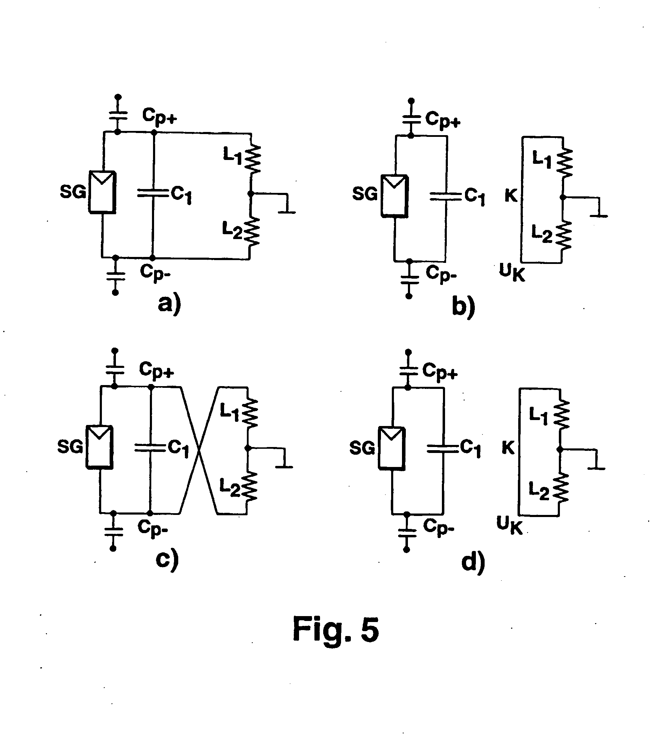

Es ergeben sich somit während des Betriebes des mit symmetrischer Taktung betriebenen Wechselrichters folgende in den Figuren 5 und 6 im Einzelnen dargestellte Potenzialverhältnisse.

Figuren 5a und c stellen Ersatzschaltbilder für die Wechselrichtertopologie in den Fällen geschlossener Schaltereinheiten A, D (siehe Figur 5a) sowie B, C (siehe hierzu Figur 5c) dar. Es zeigt sich grundsätzlich kein Unterschied zum bekannten Fall (siehe Figur 4a, c). Während der Freilaufphasen, d. h. bei geöffneten Schaltereinheiten A, D, stellt sich der in Figur 5b dargestellte Zustand ein, wohingegen das Ersatzschaltbild für die geöffnete Schalterstellung bezüglich der Schaltereinheiten B, C der Figur 5d zu entnehmen ist. Es zeigt sich, dass während der sog. Freilaufphasen, d. h. die Schaltereinheiten A, B, C, D sind offen, gemäß der Ersatzschaltbilder in den Figuren 5b und d am Verbindungsknotenpunkt K aufgrund der symmetrischen Spulenanordnung $L_1$, $L_2$ die halbe Netzspannung $U_{Netz}/2$ anliegt. Die Spannung an dem Verbindungsknotenpunkt K liegt daher immer innerhalb der beiden an den Solargeneratoranschlussleitungen vorherrschenden Potenziale.

Somit liegt unter Voraussetzung idealer Bauelemente während der Freilaufphasen keine ohmsche Verbindung zwischen dem Solargenerator und dem Netz vor. Dies jedoch führt zu dem erfreulichen Vorteil, dass hochfrequente Spannungssprünge, wie sie beim eingangs beschriebenen bekannten Wechselrichter mit unsymmetrischer Taktung oder Einphasen-Chopping auftreten, gänzlich vermieden werden können. Überdies bleibt während der Freilaufphasen das Potenzial der Anschlussleitungen des Solargenerators aufgrund bestehender parasitärer Kapazitäten $C_{p+}$ bzw. $C_{p-}$ auf konstantem Potenzial. Diese Eigenschaft führt zu einer hohen elektromagnetischen Verträglichkeit ohne jegliches Gefährdungspotenzial.

Selbst wenn die eingesetzten Drosselspulen L1 und L2 nicht exakt über identische Induktivitäten verfügen - eine Forderung, die bei einer Schaltung nach dem Stand der Technik und symmetrischer Taktung mit großem Bedacht einzuhalten ist, will man den hochfrequenten Potenzialsprüngen Einhalt gebieten -, verschieben sich bei der erfindungsgemäßen Schaltung die mittleren Potenziale während beider Halbwellen nur geringfügig gegeneinander, sie sind nicht mehr exakt +/- Usg/2. Damit tritt beim Wechsel von einer Halbwelle zur anderen, d. h. mit 50 Hz, ein kleiner Potenzialsprung auf, der aber leicht beherrschbar ist. Somit können die Drosselinduktivitäten durchaus übliche Toleranzen aufweisen, gleichwohl die EMV erheblich verbessert ist.

Aus Figur 6 ist eine Diagrammdarstellung zu entnehmen, die die an den Solargeneratorleitungen anliegenden Spannungsverläufe zeigt. Symmetrisch und zeitsynchron verhalten sich das positive und negative Anschlusspotenzial auf den Solargeneratoranschlussleitungen, wobei im Falle des Anliegens einer Netzwechselspannung eine maximale Amplituden von $U_{SG}/2 + \sqrt{2} \times 230/2$ V bei einer Frequenz von 50 Hz auftritt.

Ein weiterer interessanter Aspekt betrifft die Ausbildung der Gleichrichterdioden DA, DB, DC sowie DD, für deren Diodenqualität im Falle des erfindungsgemäß ausgebildeten Wechselrichters keine besonderen Anforderungen bestehen, da sie in den Freilaufphasen keine erwähnenswerte Kommutierungsfunktionen übernehmen, da die Kommutierung des Drosselstromes während der Freilaufphasen je nach Polarität der Halbwelle der Netzspannung über die Gleichrichterdioden DE bzw. DF erfolgt. Gleichwohl ihre Bedeutung und somit der Qualitätsanspruch an die Gleichrichterdioden reduziert ist, kann auf sie nicht völlig verzichtet werden. Der Grund hierfür liegt in der Notwendigkeit einer möglichst vollständigen Entmagnetisierung der Drosselinduktivitäten $L_1$, $L_2$ gegen Ende einer jeden Netzhalbwelle, die bei geschlossener Stellung des Schalters E bzw. F aufgrund der niedrigen zum Stromabbau zur Verfügung stehenden Netzspannung nicht gewährleistet werden kann. Aus diesem Grund sind die Schalter E bzw. F nicht während der gesamten Dauer der jeweiligen Halbwelle geschlossen, sondern öffnen bereits kurz vor Ende der jeweiligen Halbwellen, wie dies im Übrigen auch aus der Gegenüberstellung des Zeitverhaltens der einzelnen Schalter in Bezug auf die Halbwelle gemäß Figur 7 zu entnehmen ist. Das vorzeitige Öffnen des jeweiligen Schalters E bzw. F (siehe hierzu die verkürzten Schaltzeiten $T_E$ bzw. $T_F$ in Bezug auf die zeitliche Länge der jeweiligen Halbwellen in Figur 7) ist erforderlich, damit sich der in den Drosselspulen $L_1$, $L_2$ präsente Drosselstrom aufgrund der nach Öffnen des Schalters E bzw. F über den Spulen anliegenden Summe aus momentaner Netzspannung und Eingangsspannung schnell abbauen kann. Hierfür dienen die Gleichrichterdioden DA, DB, DC und DD gleichsam dem vorstehend beschriebenen Stand der Technik. So kommutiert bspw. der Drosselstrom während der positiven Halbwelle bei geöffneten Schaltern A - F über die Dioden DB und DC in den Kondensator $C_1$. Da das Öffnen der Schalter E bzw. F in Zeitbereichen erfolgt, in denen die Drosselströme weitgehend abgeklungen sind, treten jedoch keine nennenswerten Stromrippel-Effekte auf, die den Vorteil der erfindungsgemäßen Schaltungstopologie zu beeinträchtigen vermögen.

Das zeitliche Ansteuern der Schaltereinheiten E und F erfolgt über eine Steuereinheit, die im einfachsten Ausführungsbeispiel über diskrete Zeitglieder realisierbar ist. Nachteilhaft bei der Verwendung von Zeitgliedern mit konstanter Einschaltzeit $T_E$ bzw. $T_F$ ist die Tatsache, dass nicht ausgeschlossen werden kann, dass die Schalter E, F in Bezug auf den Verlauf der Wechselspannung zu früh oder zu spät geöffnet werden, wodurch Wirkungsgradverluste sowie EMV-Probleme, wie sie aus dem Stand der Technik bekannt sind, auftreten.

Eine bevorzugte Ausführung des zeitlichen Ansteuerns der Schalter E, F basiert auf der Nutzung des Fehlersignals des Stromreglers und der Phaseninformation über die Netzspannung. Ein derartiger gemäß dem Stand der Technik in der Wechselrichtersteuerung vorhandener Stromregler bildet stets die Differenz aus einem sinusförmigen Strom-Sollwert und dem tatsächlichen Strom-Istwert.

Die als Fehlersignal FS bezeichnete Differenz aus Strom-Sollwert und Strom-Istwert ist in der positiven Halbwelle positiv, sofern der Ausgangsstrom kleiner als der Sollwert ist und negativ, falls er über dem Sollwert liegt. Dieses Fehlersignal FS verfügt näherungsweise über einen sinusförmigen Verlauf und steuert über einen Pulsweiten-Modulator (PWM) die Einschaltzeiten der Schaltereinheiten A bis D.

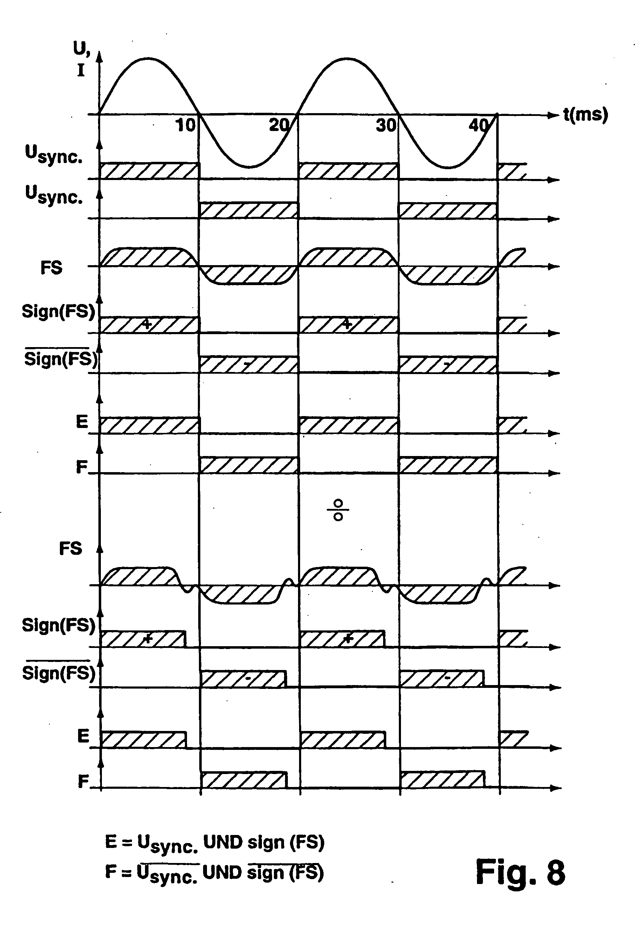

Im oben beschriebenen Fall eines zu langsam abklingenden Drosselstromes reagiert der Regler während der positiven Halbwelle mit einem negativen Fehlersignal, und entsprechend umgekehrt während der negativen Halbwelle (siehe hierzu in Figur 8 die klein ausgebildete negative Halbwelle im Fehlersignal FS gegen Ende einer positiven Halbwelle bzw. die Ausbildung einer kleinen positiven Halbwelle gegen Ende der negativen Halbwelle). Dieses Verhalten im Fehlersignal FS dient in vorteilhafter Weise zur Ansteuerung der Schalter E bzw. F, in dem das Vorzeichen des Fehlersignals SIGN(FS) mit dem Synchronisationssignal $U_{synch}$ über eine UND-Verknüpfung logisch verbunden wird. So wird der Schalter E ausschließlich dann geschlossen, wenn die positive Halbwelle UND ein positives Fehlersignal vorliegen. Für die Ansteuerung des Schalters F werden die negierten Signale von $U_{synch.}$ sowie SIGN(FS) über eine UND-Schaltung logisch miteinander verknüpft.

Mit Hilfe einer derartigen, selbstregelnden Zeittaktung der Schalter E sowie F können deren Öffnungszeitpunkte automatisch optimal bestimmt werden. Auf diese Weise kann der höchste Wirkungsgrad bei geringsten Verzerrungen im Strom und geringsten EMV-Probleme beim Betrieb des erfindungsgemäßen Wechselrichters erzielt werden.

Die in Figur 1 dargestellte Anordnung ist prinzipiell auch für einen Einsatz als Inselwechselrichter geeignet. Hierbei kann die speisende Energiequelle entweder ein Solargenerator (z. B. zur Notstromversorgung bei ausreichender momentaner Solargeneratorleistung) oder typischerweise ein Batteriespeicher oder eine Brennstoffzelle sein. Im Falle eines Inselbetriebes muss der Wechselrichter selbst eine in Spannung und Frequenz stabile sinusförmige Ausgangsspannung bereitstellen, wozu er intern einen sinusförmigen Spannungssollwert aus z. B. einer Tabelle oder durch Echtzeit-Berechnung generiert. Weiterhin muss er auch einen Energierückfluss aus dem Netz in Richtung auf den Pufferkondensator oder die speisende Quelle (z. B. eine Batterie) erlauben (4-Quadranten-Betrieb). Dies ist im Falle eines Inselbetriebes mit reaktiven Lasten und entsprechenden Phasenverschiebungen zwischen Strom und Spannung zwingend erforderlich.

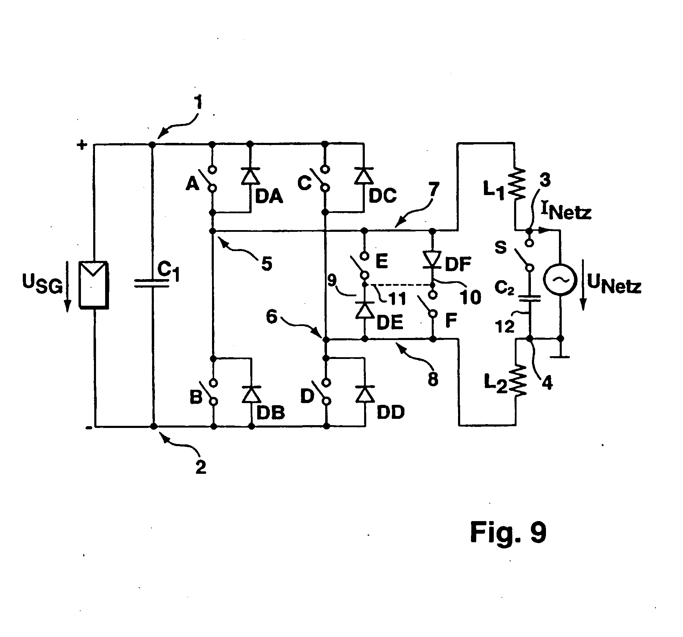

Für einen Inselbetrieb wird daher die Schaltung aus Figur 1 gemäß Figur 9 um einen Ausgangskondensator $C_2$ erweitert, der über einen Schalter S in der Betriebsart Inselbetrieb parallel zu den Ausgangsklemmen des Wechselrichters geschaltet wird.

Dieser Ausgangskondensator $C_2$ wirkt in bekannter Weise als Energiepuffer im Ausgangskreis und dient z. B. der Aufrechterhaltung der gewünschten sinusförmigen Spannung bei sprunghaften Laständerungen (z. B. bei einer Last mit Phasenanschnittsteuerung).

Weiterhin ist eine Änderung der Taktung der Schalter gemäß Figur 10 gegenüber dem netzgekoppelten Betrieb erforderlich. Während in der Betriebsart "Netzeinspeisung" der Wechselrichter immer wie ein Tiefsetzsteller arbeitet und aus der hohen Solargeneratorspannung eine sinusmodulierte niedrigere Ausgangsspannung erzeugt, ist in der Betriebsart "Inselbetrieb" eine zeitweise Umkehrung der Energieflussrichtung erforderlich, bei welcher der Wechselrichter als Hochsetztsteller arbeitet und Energie von dem niedrigeren Ausgangsspannungsniveau auf das höhere Spannungsniveau des Eingangskondensators $C_1$ bzw. der speisenden Batterie hochsetzt. Das hierzu notwendige Verhalten des Wechselrichters als Hochsetzsteller lässt sich durch eine Ansteuerung der Schalter gemäß Figur 10 erreichen. Im Gegensatz zu Figur 7 werden in entsprechenden Abschnitten des Spannungs-Sollwertes hier die Schalter E bzw. F im Gegentakt zu den Brückenschaltern A, D bzw. B, C getaktet. So wird z. B. während der positiven Halbwelle der Schalter E wie beschrieben permanent eingeschaltet, der Schalter F jedoch gegenphasig zu dem Schalterpaar A, D angesteuert. Damit ergibt sich die Möglichkeit, dass sich bei positiver Ausgangsspannung $U_{Netz}$ über den geschlossenen Schalter F ein negativer, in den Wechselrichter hineinfließender Drosselstrom $I_{Netz}$ aufbaut. Wird im nächsten Taktabschnitt der Schalter F geöffnet, so kommutiert der Drosselstrom zunächst auf die Dioden DA und DD, so dass ein Energiefluss in den Pufferkondensator $C_1$ bzw. im Falle einer Speisung des Wechselrichters aus einer Batterie in diese Batterie möglich ist. Werden nach Ablauf einer kleinen Verzögerungszeit, die zur Vermeidung von Überlappungen der Schließzeiten der Schalter erforderlich ist, die Schalter A und D geschlossen, so kann der Strom alternativ über diese beiden Elemente in die Quelle zurück fließen. Der Freilaufpfad 9 mit dem Schalter E und der Diode DE ist während dieses Vorgangs der Energierückspeisung ohne Funktion, übernimmt aber bei einer Umkehrung der Energieflussrichtung sofort wieder wie beschrieben seine Aufgabe als Freilaufpfad für positive Ausgangsströme $I_{Netz}$.

Die Umschaltung zwischen den beiden Betriebsarten kann problemlos im laufenden Betrieb erfolgen, so dass ein 4-Quadranten-Betrieb auch im Netzparallelbetrieb möglich ist, falls der Wechselrichter z. B. zur Blindstromkompensation oder als aktives Oberwellenfilter eingesetzt werden soll. Weiterhin ist auch eine Umschaltung zwischen den im Stand der Technik beschriebenen Taktungsarten und den neuartigen Verfahren möglich, um z. B. in der Nähe des Nulldurchganges einen glatten Übergang von einer Halbwelle zur anderen zu erzielen.

### Bezugszeichenliste

| | |
|---|---|
| 1, 2 | Gleichspannungsanschlüsse |
| 3, 4 | Wechselspannungsanschlüsse |
| 5, 6 | Verbindungsknoten |
| 7, 8 | Verbindungsleitungen |
| 9, 10 | Verbindungspfade |
| 11 | Elektrische Verbindung |
| 12 | Verbindungspfad |
| SG | Solargenerator |
| $C_1$ | Pufferkondensator (Eingang) |
| $C_2$ | Pufferkondensator (Ausgang) |
| A, B, C, D | Schaltereinheiten |
| E, F, S | Schalter |
| DA, DB, DC, DD, DE, DF | Gleichrichterdioden |
| $L_1, L_2$ | Drosselinduktivitäten |
| W | Wechselrichter |
| SG | Solargenerator |
| K | Knotenpunkt |

### Patentansprüche

1. Wechselrichter mit zwei Gleichspannungsanschlüssen (1, 2), zwischen denen in paralleler Schaltungsanordnung ein Energiezwischenspeicher ($C_1$) und eine Brückenschaltung vorgesehen sind, die wenigstens zwei Paralleläste aufweist, die jeweils zwei in Reihe geschaltete Schaltereinheiten (A, B sowie C, D) vorsehen, zu denen jeweils eine Gleichrichterdiode (DA, DB, DC, DD) parallel geschaltet ist, sowie mit wenigstens zwei Wechselspannungsanschlüssen (3, 4), von denen jeder einzeln über eine Verbindungsleitung (7, 8), in der jeweils eine Drosselinduktivität ($L_1$ bzw. $L_2$) vorgesehen ist, mit einem der Paralleläste der Brückenschaltung jeweils zwischen zwei Schaltereinheiten (A, B, bzw. C, D) über einen Verbindungsknoten (5, 6) verbunden ist, wobei zwischen den wenigstens zwei Verbindungsleitungen (7, 8) zwei elektrische Verbindungspfade (9, 10) vorgesehen sind, in denen jeweils ein Schalter (E bzw. F) sowie eine in Reihe geschaltete Gleichrichterdiode (DE bzw. DF) vorgesehen sind, und

dass die Gleichrichterdioden (DE, DF) in den einzelnen Verbindungspfaden (9, 10) zueinander in entgegengesetzter Durchlassrichtung geschaltet sind,

wobei eine Steuereinheit die Schalter (E, F) in Abhängigkeit einer an den Wechselspannungsanschlüssen (3, 4) anliegenden Wechselspannung und eines Fehlersignals, das sich aus einem Drossel-Strom-Soll-Wert und einem Drossel-Strom-Ist-Wert zusammensetzt, derart schaltet, dass derjenige Schalter (E, F) innerhalb des jeweiligen Verbindungspfades (9, 10) während einer Halbwelle der Wechselspannung zumindest zeitweise geschlossen wird, dessen zugehörige Gleichrichterdiode (DE, DF) in Durchlassrichtung für eine längs des jeweiligen Verbindungspfades (9, 10) durch die Wechselspannungsquelle vorgegebene Stromrichtung orientiert ist.

2. Wechselrichter nach Anspruch 1,
   wobei die einzelnen Schalter (E, F) in den Verbindungspfaden (9, 10) zeitsynchron mit den positiven bzw. negativen Halbwellen der an den Wechselspannungsanschlüssen (3, 4) anliegenden Wechselspannung schaltbar sind.

3. Wechselrichter nach Anspruch 1 oder 2,
   wobei die Wechselspannung eine niederfrequente Netzspannung $U_{Netz}$ mit einer Wechselfrequenz von 50 Hz oder 60 Hz ist.

4. Wechselrichter nach einem der Ansprüche 1 bis 3,
   wobei die Steuereinheit den jeweils geschlossenen Schalter (E, F) öffnet, noch bevor die Halbwelle der Wechselspannung ihren Potenzialnulldurchgang erfährt, so dass bis zum Beginn der nächstfolgenden Halbwelle beide Schalter (E, F) geöffnet sind.

5. Wechselrichter nach einem der Ansprüche 1 bis 4,
   wobei die Steuereinheit konstante Zeitglieder aufweist, die in Abhängigkeit von der Wechselspannung abgestimmt sind und die Schalter (E, F) mit einer konstanten Einschaltdauer ansteuern.

6. Wechselrichter nach einem der Ansprüche 1 bis 5, zwischen den zwei wobei elektrischen Verbindungspfaden (9, 10) eine elektrische Verbindung (11) vorgesehen ist.

7. Wechselrichter nach Anspruch 6,
   wobei die elektrische Verbindung (11) mittig zwischen dem Schalter (E, F) und der in Reihe geschalteten Gleichrichterdiode (DE, DF) jeweils eines Verbindungspfads (9, 10) verbunden ist.

8. Wechselrichter nach einem der Ansprüche 1 bis 7,
   wobei die Schaltereinheiten (A und D) sowie (B und C) in Kreuzstellung zueinander innerhalb der Brückenschaltung angeordnet sind und die den Schaltereinheiten zugeordneten Gleichrichterdioden (DA und DD) sowie (DB und DC) jeweils in Sperrrichtung zu einer durch eine an den
   Gleichspannungsanschlüssen anliegende Gleichspannung in den Parallelästen eingeprägte Stromrichtung orientiert sind,
   wobei die Steuereinheit in Abhängigkeit der an den Wechselspannungsanschlüssen anliegenden Wechselspannung die Schaltereinheiten (A und D) oder (B und C) zeitsynchron nach einem vorgebbaren Taktmuster öffnet und schließt.

9. Wechselrichter nach Anspruch 8,
   wobei die Steuereinheit die Schaltereinheiten (A und D) während der einer Halbwelle der Wechselspannung nach dem Taktmuster öffnet und schließt während die Schaltereinheiten (B und C) offen sind, und wobei die Steuereinheit bei der nächsten Halbwelle die Schaltereinheiten (B und C) nach dem Taktmuster öffnet und schließt, während die Schaltereinheiten (A und D) offen sind.

10. Wechselrichter nach Anspruch 8 oder 9,
    wobei die Schaltereinheiten (A, B, C, D) mit Schaltfrequenzen im kHz-Bereich betreibbar sind.

11. Wechselrichter nach einem der Ansprüche 8 bis 10,
    wobei das Taktmuster einer Pulsweitenmodulation entspricht.

12. Wechselrichter nach einem der Ansprüche 1 bis 11,
    wobei der Energiezwischenspeicher als Kondensator ($C_1$) ausgebildet ist.

**13.** Wechselrichter nach einem der Ansprüche 1 bis 12,
wobei die elektrischen Verbindungspfade (9, 10) jeweils zwischen den Drosselinduktivitäten ($L_1$, $L_2$) und den Verbindungsknoten (5, 6) zwischen den wenigstens zwei Verbindungsleitungen (7, 8) vorgesehen sind.

**14.** Wechselrichter nach einem der Ansprüche 1 bis 13,
wobei zwischen den Verbindungspfaden (7, 8) und den Wechselspannungsanschlüssen (3, 4) ein weiterer Verbindungspfad (12) zwischen den Verbindungsleitungen (7, 8) vorgesehen ist, längs dem ein Schalter S und ein weiterer Pufferkondensator $C_2$ in Reihe geschaltet sind.

**15.** Verwendung des Wechselrichters nach einem der Ansprüche 1 bis 14 als Netzwechselrichter.

**16.** Verwendung nach Anspruch 15,
wobei an den Gleichspannungsanschlüssen (1, 2) eine Photovoltaikeinheit oder Brennstoffzelleneinheit zur Erzeugung von Gleichspannung und an den Wechselspannungsanschlüssen (3, 4) eine Netzspannung mit 50 Hz oder 60 Hz Wechselspannung angelegt wird.

**17.** Verwendung des Wechselrichters nach einem der Ansprüche 1 bis 16 als Wechselrichter im Inselbetrieb.

**18.** Verwendung nach einem der Ansprüche 16 bis 17,
wobei der Netzwechselrichter transformatorlos ist.

**Claims**

**1.** An inverter comprising two DC voltage connections (1, 2) between which an intermediate energy store ($C_1$) and a bridge circuit are provided in a parallel circuit arrangement, comprising at least two parallel branches which each provide two series-connected switch units (A, B as well as C, D) to which respectively one rectifier diode (DA, DB, DC, DD) is connected in parallel and comprising at least two alternating voltage connections (3, 4), each of which is individually connected via a connecting line (7, 8) in which respectively one choke inductance ($L_1$ or $L_2$) is provided, to one of the parallel branches of the bridge circuit in each case between two switch units (A, D or C, D) via a connecting node (5, 6),
wherein two electrical connecting paths
(9, 10) are provided between the at least two connecting lines (7, 8), in which connecting paths respectively one switch (E or F) and a series-connected rectifier diode (DE or DF) are provided, and
the rectifier diodes (DE DF) in the individual connecting paths (9, 10) are connected to one another in the opposite direction of passage,
wherein a control unit switches the switches (E, F) depending on an alternating voltage present at the alternating voltage connections (3, 4) and an error signal composed of a choke current desired value and a choke current actual value in such a manner that that switch (E, F) within the respective connecting path (9, 10) whose relevant rectifier diode (DE, DF) is oriented in the direction of passage for a current direction along the respective connecting path (9, 10) predefined by the alternating voltage source, is at least temporarily closed during a half-wave of the alternating voltage.

**2.** The inverter according to claim 1, wherein the individual switches (E, F) in the connecting paths (9, 10) can be switched temporally synchronously with the positive or negative half-waves of the alternating voltage present at the alternating voltage connections (3, 4).

**3.** The inverter according to claim 1 or 2, wherein the alternating voltage is a low-frequency mains voltage $U_{mains}$ having an alternating frequency of 50 Hz or 60 Hz.

**4.** The inverter according to one of claims 1 to 3, wherein the control unit opens the respectively closed switches (E, F) before the half-wave of the alternating voltage undergoes its passage through zero potential so that both switches (E, F) are opened before the beginning of the next half-wave.

**5.** The inverter according to one of claims 1 to 4, wherein the control unit has constant timing elements which are tuned depending on the alternating voltage and trigger the switches (E, F) with a constant switch-on time.

**6.** The inverter according to one of claims 1 to 5, wherein an electrical connection (11) is provided between the two electrical connecting paths (9, 10).

7. The inverter according to claim 6, wherein the electrical connection (11) is connected centrally between the switch (E, F) and the series-connected rectifier diode (DE, DF) of respectively one connecting path (9, 10).

8. The inverter according to one of claims 1 to 7, wherein the switch units (A and D) as well as (B and C) are arranged in a cross position with respect to one another within the bridge circuit and the rectifier diodes (DA and DD) as well as (DB and DC) assigned to the switch units are each oriented in a blocking direction to a current direction defined by a DC voltage present at the DC voltage connections in the parallel branches, wherein the control unit temporally synchronously opens and closes the switch units (A and D) or (B and C) according to a predefinable clock pattern depending on the alternating voltage present at the alternating voltage connections.

9. The inverter according to claim 8, wherein the control unit opens and closes the switch units (A and D) during one half-wave of the alternating voltage according to the clock pattern whilst the switch units (B and C) are open and wherein the control unit opens and closes the switch units (B and C) during the next half-wave according to the clock pattern whilst the switch units (A and D) are open.

10. The inverter according to claim 8 or 9, wherein the switch units (A, B, C, D) are operable at switching frequencies in the kHz range.

11. The inverter according to one of claims 8 to 10, wherein the clock pattern corresponds to a pulse width modulation.

12. The inverter according to one of claims 1 to 11, wherein the intermediate energy store is configured as a capacitor ($C_1$).

13. The inverter according to one of claims 1 to 12, wherein the electrical connecting paths (9, 10) are each provided between the choke inductances ($L_1$, $L_2$) and the connecting nodes (5, 6) between the at least two connecting lines (7, 8).

14. The inverter according to one of claims 1 to 13, wherein between the connecting paths (7, 8) and the alternating voltage connections (3, 4) a further connecting path (12) is provided between the connecting lines (7, 8), along which a switch S and a further buffer capacitor $C_2$ are connected in series.

15. Use of the inverter according to one of claims 1 to 14 as a mains inverter.

16. The use according to claim 15, wherein a photovoltaic unit or fuel cell unit is present at the DC voltage connections (1, 2) to generate DC voltage and a mains voltage comprising 50 Hz or 60 Hz alternating voltage is present at the alternating voltage connections (3, 4).

17. Use of the inverter according to one of claims 1 to 16 as an inverter in isolated operation.

18. The use according one of claims 16 to 17, wherein the mains inverter is transformerless.

**Revendications**

1. Onduleur, avec deux connexions sur courant continu (1, 2), entre lesquelles sont prévus en disposition de montage parallèle un accumulateur tampon d'énergie (C1) et un circuit en pont, présentant au moins deux charges parallèles prévoyant chacune deux boîtes de commutation montées en série (A, B ainsi que C, D), par rapport à chacune desquelles une diode de redressement (DA, DB, DC, DD) est montée en parallèle, ainsi qu'avec au moins deux connexions sur courant alternatif (3, 4), dont chacune est reliée individuellement via une ligne de liaison (7, 8), dans laquelle chaque fois est prévue une inductance réactive ($L_1$ ou $L_2$) avec l'une des charges parallèles du circuit en pont, chaque fois entre deux boîtes de commutation (A, B, ou C, D) via un noeud de liaison (5, 6), entre les au moins deux lignes de liaison (7, 8) étant prévus deux chemins de liaison électrique (9, 10), dans chacun desquels sont prévus un commutateur (E ou F) ainsi qu'une diode de redressement (DE ou DF) montée en série, et les diodes de redressement (DE, DF) étant montées dans les chemins de liaison (9, 10) individuels dans une direction de passage mutuellement opposée, une unité de commande commutant les commutateurs (E, F) en fonction d'une tension alternative appliquée sur les connexions sur tension alternative (3, 4) et d'un signal de défaut qui se compose d'une valeur de consigne pour le courant d'inductance et d'une valeur réelle pour le courant d'inductance, de sorte que le commutateur (E, F) dont la diode de redressement (DE, DF) correspondante est orientée dans la direction de passage pour une direction de courant prédéfinie par la source de tension alternative le long du chemin de liaison (9, 10) concerné se ferme au moins partiellement pendant une demi-onde de la tension alternative, à l'intérieur du chemin de liaison (9, 10) concerné.

**2.** Onduleur selon la revendication 1,
les commutateurs individuels (E, F) étant susceptibles d'être commutés dans les chemins de liaison (9, 10) de façon synchronisée dans le temps avec les demi-ondes positives ou négatives de la tension alternative appliquée sur les connexions sur tension alternative (3, 4).

**3.** Onduleur selon la revendication 1 ou 2,
la tension alternative étant une tension réseau basse fréquence $U_{Netz}$ avec une fréquence alternative de 50 Hz ou de 60 Hz.

**4.** Onduleur selon l'une quelconque des revendications 1 à 3,
l'unité de commande fermant le commutateur (E, F) respectivement ouvert encore avant que la demi-onde de la tension alternative n'adopte son passage au point zéro du potentiel, pour qu'avant le début de la demi-onde directement suivante, les deux commutateurs (E, F) soient ouverts.

**5.** Onduleur selon l'une quelconque des revendications 1 à 4,
l'unité de commande comportant des relais temporisateurs constants, qui sont syntonisés en fonction de la tension alternative et qui excitent les commutateurs (E, F) avec une durée de mise en circuit constante.

**6.** Onduleur selon l'une quelconque des revendications 1 à 5,
une liaison électrique (11) étant prévue entre les deux chemins de liaison électrique (9, 10).

**7.** Onduleur selon la revendication 6,
la liaison électrique (11) étant reliée au centre entre le commutateur (E, F) et la diode de redressement (DE, DF) montée en série de chaque fois un chemin de liaison (9, 10).

**8.** Onduleur selon l'une quelconque des revendications 1 à 7,
les boîtes de commutation (A et D), ainsi que (B et C) étant disposées en position croisée à l'intérieur du circuit en pont et les diodes de redressement(DA et DD), ainsi que (DB et DC) associées aux boîtes de commutation étant orientées par une tension continue appliquée aux connexions sur tension continue dans la direction de courant appliquée aux charges parallèles,
l'unité de commande ouvrant et fermant les boîtes de commutation (A et D) ou (B et C) de façon synchrone dans le temps, selon un modèle de cadence prédéfinissable, en fonction de la tension alternative appliquée aux connexions sur tension alternative.

**9.** Onduleur selon la revendication 8,
l'unité de commande ouvrant et fermant les boîtes de commutation (A et D) selon le modèle de cadence, pendant l'une des demi-ondes de la tension alternative, alors que les boîtes de commutation (B et C) sont ouvertes, et pendant la prochaine demi-onde, l'unité de commande ouvrant et fermant les boîtes de commutation (B et C) selon le modèle de cadence, alors que les boîtes de commutation (A et D) sont ouvertes.

**10.** Onduleur selon la revendication 8 ou 9,
les boîtes de commutation (A, B, C, D) étant susceptibles de fonctionner à des fréquences de commutation dans la gamme des kHz.

**11.** Onduleur selon l'une quelconque des revendications 8 à 10,
le modèle de cadence correspondant à une modulation d'impulsions en largeur.

**12.** Onduleur selon l'une quelconque des revendications 1 à 11,
l'accumulateur intermédiaire d'énergie étant réalisé sous la forme d'un condensateur ($C_1$).

**13.** Onduleur selon l'une quelconque des revendications 1 à 12,
les chemins de liaison électrique (9, 10) étant prévus chacun entre les inductances réactives ($L_1$, $L_2$) et les noeuds de liaison (5, 6), entre les aux moins deux lignes de liaison (7, 8).

**14.** Onduleur selon l'une quelconque des revendications 1 à 13,
un chemin de liaison supplémentaire (12) le long duquel un commutateur S et un condensateur tampon supplémentaire $C_2$ sont montés en série étant prévu entre les lignes de liaison (7, 8), entre les chemins de liaison (7, 8) et les connexions sur tension alternative (3, 4).

**15.** Utilisation de l'onduleur selon l'une quelconque des revendications 1 à 14, en tant qu'onduleur réseau.

**16.** Utilisation selon la revendication 15,
sur les connexions sur tension continue (1, 2) étant appliquée une unité photovoltaïque ou une cellule à combustible, pour créer une tension continue et sur les connexions sur tension alternative (3, 4) étant appliquée une tension réseau avec une tension alternative de 50 Hz ou 60 Hz.

**17.** Utilisation de l'onduleur selon l'une quelconque des revendications 1 à 16, en tant qu'onduleur pour fonctionnement en îlotage.

**18.** Utilisation selon l'une quelconque des revendications 16 à 17,
l'onduleur réseau étant sans transformateur.

**Fig. 1**

Fig. 2

Fig. 3

Fig. 4

**Fig. 5**

$$\frac{+U_{SG}}{2} + \frac{\sqrt{2}\cdot 230V}{2}$$

$U_{SG}/2$

10    20    30    40    $\widetilde{UK}$    $t$ (ms)

$-U_{SG}/2$

$$\frac{-U_{SG}}{2} - \frac{\sqrt{2}\cdot 230V}{2}$$

## Fig. 6

U, I

$U_{NETZ}, I_{NETZ}$

$t$

$U_{synch.}$    $T_P$    $T_N$    $t$

E    $T_E$

F    $T_F$

AD

BC

## Fig. 7

$E = U_{sync.}$ UND sign (FS)

$F = \overline{U_{sync.}}$ UND $\overline{sign\,(FS)}$

**Fig. 8**

**Fig. 9**

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19642522 C2
- DE 19732218 C1
- EP 0203571 B1
- US 5852558 A

**In der Beschreibung aufgeführte Nicht-Patentliteratur**

- **MYRZIK, JOHANNA.** Topologische Untersuchungen zur Anwendung von tief/hochsetzenden Stellern für Wechselrichter / Johanna Myrzik. Kassel, Univ., Diss, 2000
- **MANFRED MEYER.** Leistungselektronik, Einführung, Grundlagen, Überblick. Springer-Verlag, 1990
- POWER ELECTRONICS, Converters. JOHN WILEY & SONS, 1989